(19) **Europäisches Patentamt**

**European Patent Office**

**Office européen des brevets**

(11) Publication number: **0 430 223 B1**

(12) **EUROPEAN PATENT SPECIFICATION**

(45) Date of publication of patent specification: **23.08.95**  (51) Int. Cl.⁶: **F16L 55/05**, F04F 7/02

(21) Application number: **90122783.5**

(22) Date of filing: **28.11.90**

(54) **Water hammer absorbent.**

(30) Priority: **29.11.89 JP 309747/89**
   **29.11.89 JP 309748/89**
   **12.03.90 JP 24522/90 U**

(43) Date of publication of application:
   **05.06.91 Bulletin 91/23**

(45) Publication of the grant of the patent:
   **23.08.95 Bulletin 95/34**

(84) Designated Contracting States:
   **DE ES FR GB IT SE**

(56) References cited:
   **EP-A- 0 300 791**
   **US-A- 3 146 796**
   **US-A- 4 461 322**
   **US-A- 4 881 725**

(73) Proprietor: **INAX CORPORATION**
   **3-6, Koiehonmachi**
   **Tokoname-Shi**
   **Aichi (JP)**

   Proprietor: **Yamada, Yutaka**
   **2-918, Akaikeminote,**
   **Nisshin-Cho**
   **Aichi-gun,**
   **Aichi (JP)**

(72) Inventor: **Yoshimi, Toshiaki**
   **c/o Inax Corporation,**
   **3-6, Koiehonmachi**
   **Tokoname-Shi,**
   **Aichi (JP)**
   Inventor: **Yamada, Yutaka**
   **2-918, Akaikeminote,**
   **Nisshin-Cho**
   **Aichi-gun,**
   **Aichi (JP)**

(74) Representative: **Patentanwälte Grünecker,**
   **Kinkeldey, Stockmair & Partner**
   **Maximilianstrasse 58**
   **D-80538 München (DE)**

Rank Xerox (UK) Business Services
(3.10/3.09/3.3.3)

## Description

The present invention relates to a water hammer absorber which relieves a water hammer phenomenon so called a water hammering phenomenon which is presented in case a valve portion of a faucet is closed suddenly so as to prevent a damage on faucet fixtures and pipings, etc. and also to suppress generation of noises. In particular the present invention relates to a water hammer absorber according to the preamble of claim 1.

A lever type faucet in which a valve portion in opened and closed by rotary operation of a lever has been popularized rapidly of late years in place of a screw-driven faucet in which a valve portion is opened and closed by screw-feeding a valve body by rotary operation of a handle in a shaft axis direction.

A lever type faucet of this type has an advantage of simple operation and easy handling in such a manner that the valve portion can be brought under a fully closed state quickly from a fully opened state, but on the contrary, a big water hammer is produced easily on a piping system by rapid closing of the valve portion. That is, if a valve portion of a faucet is closed suddenly when water or hot water (hereinafter simply referred to as water) in a piping is flowing at a flow velocity V, a sudden pressure rises $\Delta P$ expressed by a following expression (A):

$$\Delta P = \rho CV \qquad\qquad (A)$$

(where, $\rho$: liquid density, C: propagation velocity of a pressure wave) is produced, thereby to produce a big water hammer phenomenon in a pipe. To be more concrete, C = 1,400 m/s when a tube wall is not stretched even if the pressure rises, and the flow velocity in the pipe is at approximately V≑2 m/s when the faucet is fully opened. When these values and a value of $\rho$ = 1,000 Kg/m$^3$ are put in the expression (A), the pressure rise when the faucet is closed suddenly reaches a very high value at $\Delta P$≑2,800 KPa≑28 Kgf/cm$^2$. With such a high pressure, a big water hater phenomenon is produced in a pipe.

Furthermore, when such a water hammer phenomenon is produced, impact noises are generated and faucet fixtures and pipings, etc. are damaged.

Variety of equipments have been heretofore considered in order to absorb such a water hammer. However, the fact is that a sufficiently satisfactory equipment has not been provided as yet.

From EP-A-0 300 791 a water hammer absorber is known comprising a venturi portion which is disposed on a feed water passage and generates a low pressure portion by dropping the pressure at a throttle portion when a water flow is produced, wherein said absorber further comprises a cylinder which has an inside cylinder chamber communicating with the throttle portion of said venturi portion through a communication port.

The water hammer absorber of this prior art, however, has the disadvantage that because of producing a heavy water hammer phenomenon, impact noises are generated and faucet fixtures and pipings, etc. are damaged.

Accordingly, it is an object of the present invention to provide a water hammer absorber in which said damage is avoided and in which it is assured that a water hammer is absorbed.

This object is achieved by the features of claim 1.

In particular, a spring is provided which urges the piston toward the side of the communication port of said cylinder chamber, said spring having a spring force of such a value that the piston is pushed forward to a front end portion of the cylinder, which is located at the side of the communication port, when a water flow is produced in said passage and said piston is stopped before abutting against the rear end portion, which is located opposite to the front end portion of the cylinder, when sudden pressure rises produced in said passage and a piston is pushed backward. Furthermore, there is provided a space portion on an opposite side located toward said rear end portion across the piston in said cylinder chamber communicating with atmospheric air through an air passage, and a check valve is provided which allows air flow toward the inside of the cylinder and checks air flow in an opposite direction in the air passage.

In an equipment in a first mode of the present invention, the piston is in a state that it has retreated from the front end portion of the cylinder by a certain distance by the feed water pressure, viz., a state that it is pushed backward against the urging force of the spring when the valve portion of the faucet is closed and no water flow is produced in the passage. When the valve portion of the faucet is opened under such a state and a flow is produced in the passage, pressure drop is produced at the throttle portion of the venturi portion, and water in the cylinder is sucked out into the passage through the communication port by the operation of a low pressure portion produced therein, and the piston is pushed up to the front end portion of the cylinder by the urging force of the spring at the same time.

On the other hand, when the valve portion of the faucet is closed suddenly and sudden pressure rise is produced in the passage, the piston which has been located at the front end portion of the cylinder retreats against the urging force of the spring, and water in the passage flows inside the cylinder through the communication port at the same time. With this, pressure rise produced in the passage is absorbed. At this time, the spring which is pushing the piston increases a deformation quantity along with the retreat of the piston, thus increasing elasticity thereof. Thus, the elasticity, i.e., the pushing back force is balanced with a pressure acting on the piston, thereby to stop the piston before the piston reaches the rear end portion of the cylinder. This is because of the fact that the urging force (spring force) of the spring has been set to such a value in advance.

Namely, since secondary pressure wave is produced when the piston collides with the rear end portion of the cylinder, it is arranged in the present invention so that the piston is stopped before it strikes against the rear end portion of the cylinder, thus preventing generation of the secondary pressure wave.

Then, the piston which has been pushed back by sudden pressure rise is pushed out toward the front end side of the cylinder in succession by means of the urging force of the spring, and stops at a position where the urging force and the feed water pressure acting on the piston are balanced with each other. Then, when a water flow is produced, the piston is advanced again to the front end portion of the cylinder and stands by absorbing sudden pressure rise which occurs in the second place.

As described above, a water hammer absorber of the present invention has a feature of absorbing pressure rise effectually by operating the piston effectively through the operation of the venturi portion. That is, when such a venturi portion is not provided, the piston is kept in a state of being pushed back by a certain quantity in the cylinder by means of the feed water pressure even in case a water flow is produced in the passage. Therefore, when sudden pressure rise is produced in the passage by sudden closing of the faucet valve portion, a retreatable effective stroke is shortened accordingly due to pressure absorption, and pressure absorption is not made effectively. In an equipment of the present invention, however, the piston retreats from the front end portion of the cylinder so as to perform pressure absorption based on the operation of the venturi portion. Thus, it is possible to control pressure rise effectually.

Other than the foregoing, an equipment of the present invention has such a feature that the cylinder can be miniaturized, thus forming the whole equipment compact in size. This is because the piston can be operated effectually by the operation of the venturi portion, in other words, the cylinder capacity can be used efficiently without waste for the purpose of pressure absorption.

Incidentally, this venturi portion has an operation to immediately recover pressure downstream after pressure drop in the throttle portion. Accordingly, it has an advantage that a flow resistance when the present equipment is provided can be controlled small.

In case a low pressure portion is generated by the venturi portion according to the present invention, such a merit that the maximal flow quantity can be limited when the feed water pressure is extraordinarily high. When the feed water pressure is extraordinarily high as stated above, the flow quantity when the faucet valve portion is fully opened becomes very large, and the water hammer produced when the valve portion is brought into a fully closed state from a fully opened state also becomes very large in this case, and it is very difficult practically to prevent it. When a venturi portion is provided on the passage, however, cavitation is produced at the throttle portion of the venturi portion and water over a certain quantity does not flow even if the valve portion of the faucet is fully opened, thus limiting the water flow quantity. Accordingly, generation of a water hammer when the valve portion is fully closed can also be restricted sufficiently.

In the equipment of the first mode of the present invention, the piston is in a state that it has retreated at a certain distance from the front end portion of the cylinder to a position where a feed water pressure and an urging force of the spring which are acting in opposite directions to each other are balanced.

When the valve portion of the faucet is opened, and then the same valve portion is closed suddenly in the state described above, sudden pressure rise such as shown in the expression (1) is produced, which propagates in the pipe line. Then, the piston retreats in the cylinder against the urging force of the spring, which admits water in the pipe into the water chamber of the cylinder. Thus, pressure rise in the pipe is absorbed by retreating motion of the piston and water inflow into the water chamber, thus absorbing a water hammer. With this, generation of impact noises and damages on faucet fixtures and pipings, etc. are prevented.

An equipment of the present invention has a feature of absorbing pressure rise in the pipe effectively by means of the operation of the air chamber formed in the cylinder and the check valve.

Namely, in an equipment of the present invention, the piston is made to retreat in the cylinder against the urging force of the spring when sudden pressure rise is produced in a pipe line. If the urging force of the spring is weak at that time, however, the piston collides with the rear end portion of the cylinder or respective windings of the spring stick to each other (in the case of a coil spring), thus stopping the piston suddenly, and a pressure wave is generated newly there.

On the other hand, if the urging force of the spring is set strong for the purpose of preventing the above, the spring can not retreat in the cylinder smoothly when sudden pressure rise is produced in the pipe, thus deteriorating absorbing performance of the pressure.

On the contrary, in an equipment of the present invention, an air chamber is formed behind the piston, the air enclosed in the air chamber is compressed when the piston is made to retreat so as to act as an air spring. Further, the resiliency of the air spring becomes stronger rapidly along with the retreating motion of the spring. Namely, in the case of an ordinary spring, the resiliency becomes larger linearly along with the retreat of the piston. On the contrary, however, the resiliency gets stronger along with the retreat of the piston, i.e., reduction in volume of the air chamber in the case of an air chamber. Accordingly, even if a strong pressure is applied to the piston based on sudden pressure rise in the pipe, the piston will never collide with the rear end portion of the cylinder, but is stopped surely immediately therebefore, and that stopped gently. Therefore, a secondary pressure wave will never be generated at the retreat end portion of the piston.

Furthermore, since it is possible to stop the piston gently and surely by the operation of the air spring, the spring constant of the spring can be set weak. When the spring constant can be weak, it is possible to have the piston retreat smoothly at the initial stage of retreat, thus making it possible to improve the pressure absorption characteristic.

Incidentally, in an equipment of the present invention, outside air flows into the air chamber through the atmospheric air inlet passage and the check valve. Therefore, if a low pressure portion where a low pressure is generated by a water flow is provided in a pipe line for instance and is made to communicate with the cylinder, outside air opens the check valve and flows into the air chamber simultaneously with advancing the piston by the operation of the low pressure portion when a water flow is generated in the pipe.

Other than the foregoing, an equipment of the present invention has such an advantage that, even in case water leakage occurs at a fitted and sealed portion between the piston and the cylinder, the water is not let to leak outside. This is because of the fact that, even if water leaks from the water chamber of the cylinder to the air chamber at that part, the water is prevented from leaking outside by the operation of the check valve.

As to a second mode, a water hammer absorber of a type in which an impulse wave generated in a water channel is absorbed by movement of a piston disposed inside a cylinder through a spring is constructed so that a recessed portion which can house the spring is formed on the piston and at least a part of a suction valve provided fixedly on an opposite side in the cylinder can be inserted loosely in the recessed portion when the piston has moved to the maximum.

Also, in this second mode, the impulse wave generated in a water channel is absorbed nicely by movement of the piston installed in the cylinder. When sudden impulse wave and the like are further generated in a state that the piston has moved, the piston is moved further against the urging force of the spring and a state in which a part of the suction valve disposed in the cylinder is inserted into the recessed portion of the piston is presented. When a part of this suction valve is inserted into the recessed portion of the piston, air in the recessed portion is compressed strongly, and a reaction force over the urging force of the spring is generated by the resiliency of the air compressed in the recessed portion, thus making it possible to absorb the impulse wave mightily.

BRIEF DESCRIPTION OF THE DRAWINGS

Fig. 1 is a sectional view showing an embodiment of a water hammer absorber of the present invention;
Fig. 2 is a sectional view showing a further embodiment of a water hammer absorber of the present invention, and Fig. 3 and Fig. 4 are sectional views showing different operating states of the absorber, respectively.
Fig. 5 is a sectional construction drawing showing still another embodiment of the water hammer absorber of the present invention, and Fig. 6 is a sectional construction drawing corresponding to Fig. 5 in a state that the piston has moved downward.

In the next place, embodiments of the present invention will be described in detail with reference to the drawings

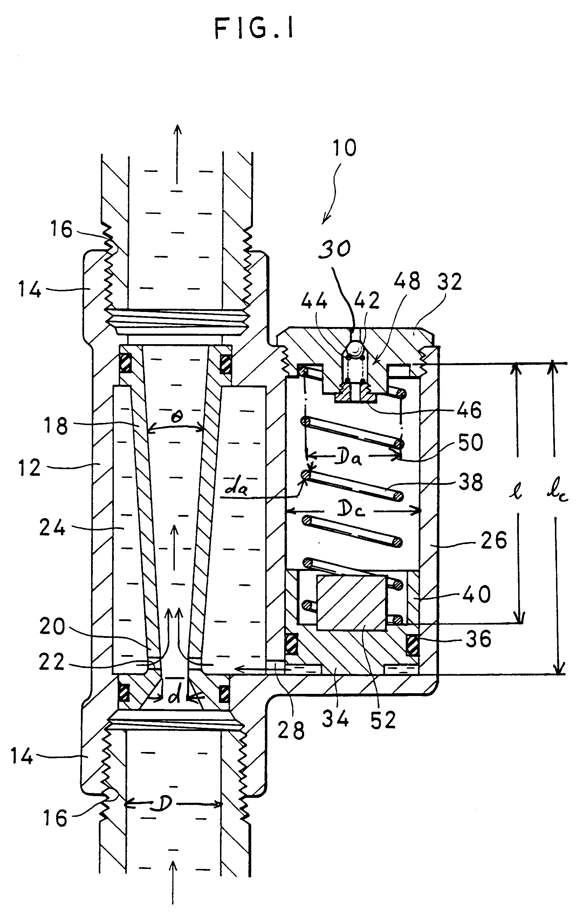

In Fig. 1, a reference numeral 10 denotes a water hammer absorber showing an example of the present invention, which includes a cylindrical portion 12. Connecting portions 14 with pipings 16 are provided at both ends of the cylindrical portion 12, and female screw thread for coupling with the piping 16 is provided on an internal surface of each connecting portion 14.

Inside the cylindrical portion 12 is provided a venturi tube 18. A through hole 22 is formed at a throttle portion 20 of the venturi tube 18, and the inside of the venturi tube 18 and an external communication chamber 24 are made to communicate with each other through this through hole 22.

Here, an inside diameter d of the throttle portion 20 is not so small as compared with the inside diameter D of the pipe line, and is limited to about d = 0.3 D. Further, a divergent angle $\theta$ is also set at about 7° where the loss is minimal. Therefore, a big pressure loss is not produced when water is circulating through that portion.

26 denotes a cylinder provided integrally with the cylindrical portion 12, and a communication port 28 is provided at one end thereof. The inside cylinder chamber is made to communicate with the communication chamber 24 and the inside of the throttle portion 20 of the venturi tube 18 through this communication port 28.

At an opening on another end side of the cylinder 26, a cylinder block 32 having an atmospheric air inlet hole 30 is fixed by screw coupling.

A piston 34 is fitted slidably inside the cylinder 26. An annular groove is formed on an outer circumferential surface of the piston 34, and an O-ring 36 is installed in the annular groove. The fitting portion between the piston 34 and the inner surface of the cylinder 26 is sealed watertightly by means of this O-ring 36.

A compression coil spring 38 is interposed between the piston 34 and the cylinder block 32. The spring 38 is made to abut against the cylinder block 32 at one end and against the rear surface of the piston 34 at another end. Besides, a cylindrical portion 40 is formed on the piston 34, and a part of the spring 38 is housed inside this cylindrical portion 40.

In a first equipment of the present embodiment, the spring force of the spring 38 is set so that, when a water flow is produced in the passage, the piston 34 abuts against the lower end portion in the figure (the front end portion) of the cylinder 26, and when sudden pressure rise is produced in the passage and the piston 34 is made to retreat, the piston 34 is stopped immediately before abutting against the cylinder block 32.

Next, the operation of the present equipment will be described.

In the equipment of the present embodiment. the piston 34 is pushed back by a certain quantity upwardly in the figure by means of the feed water pressure, and is stopped at a position where the feed water pressure and the urging force of the spring 38 urging the feed water pressure in an opposite direction are balanced with each other in a state that the valve portion of the faucet is closed.

When the valve portion is opened and a water flow is produced in the passage in such a state, the water which has entered into the cylinder chamber is sucked out into the passage by means of the operation of a low pressure portion generated in the throttle portion 20 of the venturi tube 18 and the urging force of the spring 38, and the piston 34 is pushed forward to the lower end portion in the figure (the front end portion).

Next, when the faucet valve portion is closed suddenly, sudden pressure rise $\Delta P = \rho CV$ specified in the expression (A) is produced at that portion, and is propagated in the piping passage. Then, the water in the passage flows into the cylinder 26 through the through hole 22, the communication chamber 24 and the communication port 28 while pushing up the piston 34 based on the pressure rise. Namely, the water in the passage escapes into the cylinder 26, thus absorbing pressure rise thereby to avoid generation of a water hammer phenomenon.

Incidentally, at that time, the piston 34 retreats proximately to the rear end portion of the cylinder 26 while bending the spring 38, and stops once at that position where the pressure acting on the piston 34 and the spring force of the spring 38 are balanced with each other.

Now, the piston 34 which has once retreated proximately to the rear end portion of the cylinder 26 is pushed forward without intermission by the spring 38, and stops at a position where the urging force and the feed water pressure acting on the piston 34 are balanced with each other. When a water flow is produced again in the passage, the piston 34 is advanced by the operation of the venturi tube 18, and retreats to the full again in the cylinder 26 when sudden pressure rise is produced in the passage, thereby to absorb pressure rise.

Incidentally, even when the venturi tube 18 is not provided as above, but the cylinder chamber is simply made to communicate with the passage, it is possible to absorb pressure rise in the passage to some extent. In this case, however, various troubles occur.

For example, in case the same spring 38 as above is used without providing the venturi tube 18, the piston 34 does not advance to the front end portion of the cylinder 26 even if a water flow is produced in the passage, but stops at a position where it has retreated from the front end portion of the cylinder 26 by a certain distance, i.e., at a position where the feed water pressure and the urging force of the spring 38 are balanced with each other. Then, when sudden pressure rise is generated in the passage, the pressure rise is absorbed by means of the retreat motion from that position. The moving stroke in this case is small, and thus, the inflow quantity of water into the cylinder 26 also gets smaller. Therefore, it is impossible to absorb pressure rise effectively.

On the contrary, in the equipment of the present invention, the piston 34 retreats in almost full stroke of the cylinder 26 thereby to absorb the pressure. Thus, it is possible to control pressure rise in the passage effectively.

Furthermore, the cylinder chamber is utilized fully in order to absorb pressure rise in the equipment of the present embodiment. Accordingly, it is possible to fully accomplish the object with a small-sized cylinder and to construct a water hammer absorber in a compact size.

Besides, when the venturi tube 18 is not provided, it is also possible to produce a state in which the piston 34 is made to advance to the front end portion of the cylinder 26 in a state that a water flow is produced in the passage by setting the spring in a precompressed state (in this case, since a low pressure portion is not generated, the piston 34 presents a state that it has advanced to the front end position of the cylinder 26 regardless of the existence of a water flow). In this case, however, such problems are produced as follows.

In order to absorb pressure rise caused by water hammering effectively, it is required to satisfy the following conditions.

(a) More water in the passage has to be made to flow into the cylinder 26 by that the piston 34 advances to the front end portion of the cylinder 26 at the time of flowing water and retreats to the rear end portion of the cylinder 26 by means of pressure rise.

(b) When the piston 34 stops at the retreat end, it should stop as gently as possible.

(c) A shearing stress $\tau$ which acts on the spring has to be small, and the maximal value $\tau_{max}$ is to be at an allowable shearing stress $\tau_a$ and below.

Now, when it is assumed as shown in Fig. 1 that the diameter of the cylinder chamber is $D_c$, the cylinder chamber length is $\ell_c$, the mean diameter of the spring is $D_a$, the wire diameter is $d_a$, the effective number of turns is n, and the length when fitted is , the shearing stress $\tau$ and the spring constant K are expressed as follows.

$$\tau = \frac{8D_a W}{\pi d_a{}^3} \qquad \ldots \ (1)$$

$$K = \frac{d_a{}^4 G}{8n D_a{}^3} \qquad \ldots \ (2)$$

where G is a modulus of transverse elasticity, which is approximately at 7,500 Kg/mm$^2$ (7357.5 daN/mm$^2$) in the case of a stainless steel wire.

Also, the maximal value $W_{max}$ of the compressive force W in the expression (1) is given as follows.

$$W_{max} = (\pi/4) \cdot D_c{}^2 P_{max} \qquad (3)$$

where $P_{max}$ is the maximal pressure produced by water hammering, which acts on the piston 34.

Now, when the spring is set after precompression for the purpose of having the piston 34 abut against the front end portion of the cylinder 26 by overcoming the feed water pressure, the spring constant of the spring gets smaller as compared with a case in which precompression is not applied.

Namely, when it is assumed that the piston 34 retreats to almost the rear end portion of the cylinder 26 by means of pressure rise in either case, the maximal compressive force of the spring that time is given as:

$$W_{max} = kx$$

Here, x is a displacement quantity from a free state, and the displacement quantity is naturally bigger when precompression is applied than that when precompression is not applied. Therefore, the value k is smaller when precompression is applied. When the value k gets smaller, $d_a > d_a'$ ($d_a'$ shows a case when precompression is applied and those that are applied with precompression are shown with ' hereinafter) is obtained from the expression (2) in case n and $D_a$ are unchanged, and $\tau < \tau'$ is obtained from the expression (1). That is, when precompression is applied, a large shearing stress is generated by the spring.

On the other hand, when it is assumed that $\tau$ when the piston 34 reaches the retreat end is $\tau_{max}$ which is further equal to an allowable value $\tau_a$, and substitution is made in the expression (1) with $D_a = \alpha D_c$ together with $W = W_{max} = (\pi/4) \cdot D_c^2 P_{max}$, the following expression is obtained.

$$d_a/D_c = \sqrt[3]{2\alpha \cdot P_{max}/\tau_a} \qquad (4)$$

Here, when it is assumed that $\alpha = 0.7$, $P_{max} = 7$ Kg/cm$^2$ (6.87 daN/cm$^2$) and $\tau_a = 90$ Kg/mm$^2$ (88.3 daN/mm$^2$), the following expression is obtained.

$$d_a/D_c \doteqdot 0.1$$

On the other hand, it is better to make the spring diameter $D_a$ as large as possible within the scope of $D_c$ when it is given. So, $D_a$ is also determined in accordance with the value $D_c$. Thus, when precompression is applied to the spring, the effective number of turns is determined larger than the expression (2) (The value of k is smaller as compared with the case when precompression is not applied).

When the number of turns n is determined large, the maximal stroke of the piston 34: $\ell$-nd$_a$ gets smaller, and the quantity of water which can be taken into the cylinder 26 when the piston 34 retreats gets smaller. Namely, the pressure absorption effect at the time of water hammering becomes smaller as compared with a case when precompression is not applied. In other words, it is possible to absorb water hammering more effectively by providing the venturi tube 18 as the present embodiment.

A small-sized check valve 48 consisting of a ball valve body 42, a weak spring 44 and a supporting member 46 is disposed in the cylinder chamber.

In the case of the present embodiment, an air chamber 50 is formed between the piston 34 and the cylinder block 32, and the air suctioned and confined in the air chamber 50 acts as an air spring when the piston 34 retreats so as to prevent the piston 34 from colliding with the cylinder block 32. Since the air confined in the air chamber 50 increases the resiliency suddenly with the retreat of the piston 34 thereby to prevent the piston 34 from colliding, there is such an advantage that the spring force of the spring may be set weaker for that portion. Besides, if the volume of the air chamber 50 when the piston 34 has retreated is made as small as possible, for example, by providing a protruded portion 52 in a cylindrical portion 40 as shown in Fig. 1, air compressibility is increased and the resiliency of the air spring becomes higher, which is advantageous.

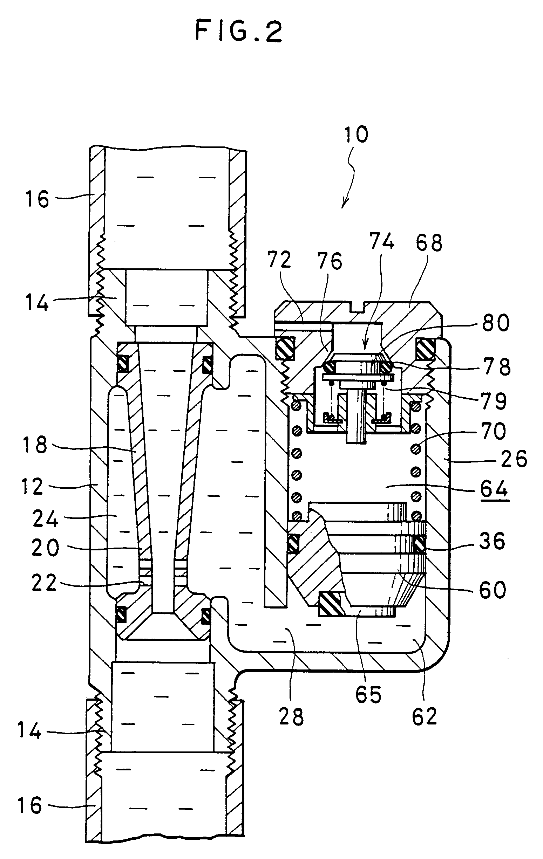

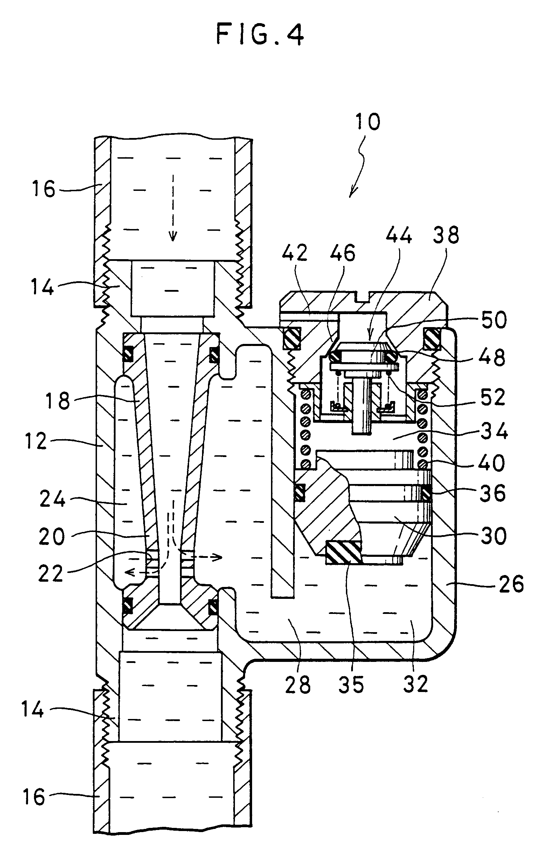

Other modes of the present invention will be described with reference to Fig. 2 to Fig. 4.

A piston 60 is fitted slidably inside a cylinder 26, and a cylinder chamber is partitioned into a water chamber 62 on a side of a communication port 28 and an air chamber 64 which is cut off from the communication port 28. An annular groove is formed on an outer circumferential surface of the piston 60, an O-ring 36 is installed in this annular groove, and the fitted portion between the piston 60 and the internal surface of the cylinder 26 is sealed by the O-ring 36. Besides, a cushion rubber 65 is provided at the front end portion (lower end portion in the figure) of the piston 60.

A cylinder block 68 is fixed on the opening side of the cylinder 26 by screw coupling. A compression coil spring 70 is interposed between the cylinder block 68 and the piston 60, and the piston 60 is urged toward the advancing side (lower side in the figure) by means of the spring 70.

In the cylinder block 68, an air suction hole 72 for introducing outside air into the air chamber 64 is formed. Further, a check valve 74 is incorporated on an air inflow passage from the air suction hole 72 to the air chamber 64. The check valve 74 permits only the air flow toward the air chamber 64 from the outside and checks a flow in a reverse direction, thereby to confine air in the air chamber 64, and includes a valve seat 76 formed in the cylinder block 68, a valve body 80 which is seated on the valve seat 76 through a seal member 78 or separated therefrom, and a weak spring 79 which urges the valve body 80 toward a closing direction.

Other symbols shown in Figs. 2 thru 4 show the same members as those shown in Figs. 1.

Next, the operation of an equipment of the present invention will be described.

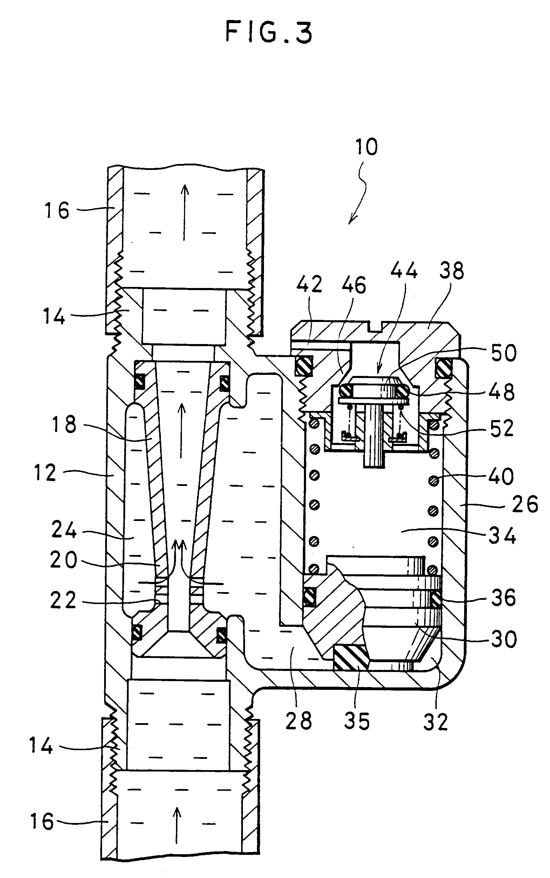

When a faucet is not in use, viz., a valve portion of the faucet is closed, the piston 60 is in such a state that it is retreated inside the cylinder 26 to a position where the feed water pressure and the urging force of the spring 70 in an opposite direction are balanced with each other as shown in Fig. 2. When the valve portion of the faucet is opened and a water flow is produced in a pipe line in such a state, pressure drop is produced to the throttle portion 20 of the venturi tube 18, thus producing a low pressure portion there. Then, the piston 60 is pushed forward to the front end portion of the cylinder 26 by the absorbing operation of the low pressure portion and the urging force of the spring 70 (see Fig. 3), and the water in the water chamber 62 of the cylinder 26 is sucked out into a pipe line 16 at the same time. At this time, the check valve 74 provided in the cylinder block 68 is opened simultaneously, and outside air is introduced into the air chamber 64.

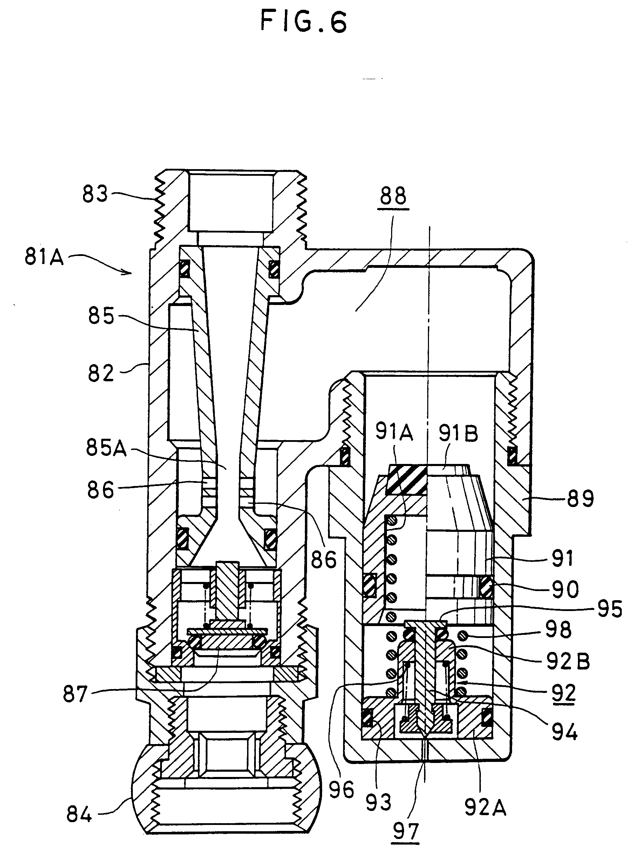

On the other hand, when the valve portion of the faucet is closed suddenly and sudden pressure rise is produced in the pipe line 16 in this state, the water in the pipe line then flows into the water chamber 62 of the cylinder 26 through a through hole 22, a communication chamber 24 and a communication port 28 and the piston 60 is also pushed backward against the urging force of the spring 70 with the above as shown in Fig. 6. With this, pressure rise in the pipe line 16 is absorbed and generation of a water hammer is suppressed.

Incidentally, the piston 60 is made to retreat by sudden pressure rise in the pipe line forcibly at the beginning, but the spring 70 is deformed by compression and increases the resiliency gradually at this time. At the same time, the air confined in the air chamber 64 by means of the check valve 74 is compressed and stores resiliency, too. Here, the resiliency (compressive reaction) of the spring 70 increases almost linearly with the retreat of the piston 60, but the resiliency of air (pressure in the air chamber 64) suddenly increases non-linearly with the retreat of the piston 60. Accordingly, the piston 60 which has retreated forcibly at the beginning stops before colliding with the check valve 74 by being pressed with the spring pressure and the air pressure because of the fact that a braking force is increased sufficiently in the vicinity of the rear end portion of the cylinder 26. Thus, generation of a secondary pressure wave at the rear end portion of the cylinder 26 based on sudden stop of the piston 30 is prevented.

Since the piston 60 is stopped surely and gently by the operation of an air spring, it is possible to set the spring constant of the spring 70 small. If the spring constant of the spring 70 can be set small, it is possible to have the piston 60 retreat smoothly and to absorb pressure rise in a pipe line nicely.

Incidentally, there is a fear that leakage is produced during a long period of time at the portion of the O-ring 36 which seals between the piston 60 and the internal surface of the cylinder 26. In the equipment of the present invention, however, even if water leaks from the water chamber 62 to the air chamber 64 through a sealed portion with the O-ring 36, leaking water is sucked into the water chamber 62 side again by the sucking operation of the low pressure portion of the venturi tube 18 when a water flow is produced in the pipe line again. Further, even if leaking water remains in the air chamber 64, the water is prevented to leak outside by the operation of the check valve 74. That is, in the equipment of the present invention, even if water leaks internally, it will never leak outside.

Embodiments of the present invention have been described in detail above, but it is also possible to compose the present invention in other configurations than the above.

For example, it is possible to increase compressibility of confined air by determining the shape of the air chamber so that the volume when the piston 60 retreats becomes as small as possible, and it is also possible to generate a low pressure portion in a pipe line by other means than the venturi tube.

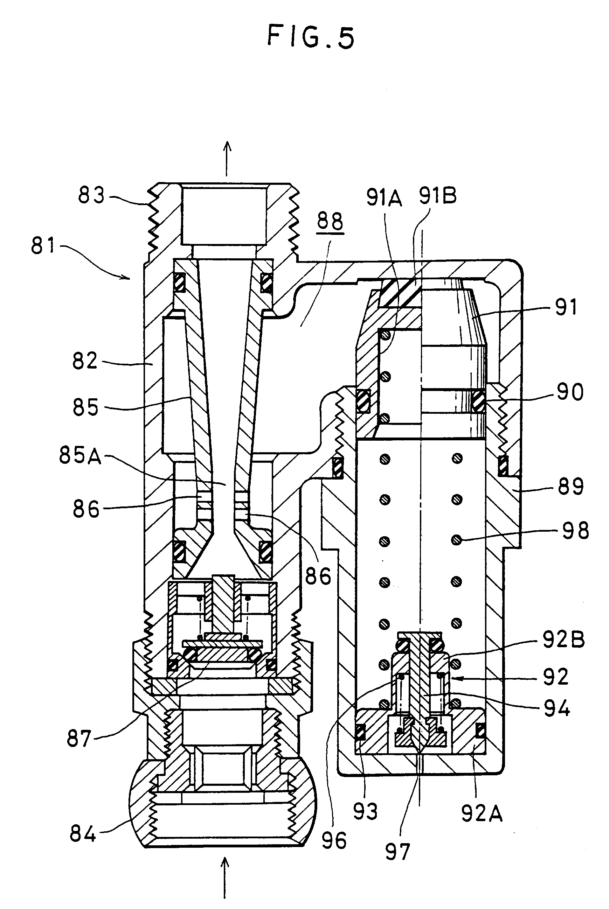

Fig. 5 is a sectional construction drawing of a water hammer absorber according to a second mode of the present invention. This water hammer absorber 81 is disposed in a piping passage of faucet fixtures and the like. Connecting portions 83 and 84 are formed at an upper end portion and a lower end portion of a cylindrical body 82, respectively, so that pipings may be connected to those connecting portions 83 and 84, and faucet fixtures and the like are connected to the connecting portion 83 side and a city water pipe and the like are connected to the connecting portion 84 side. A venturi tube 85 is disposed inside this cylindrical body 82, and one or two and more through ports 86 are formed by boring at a throttle portion 85A of the venturi tube 85. This through port 86 is in a communicating state with a communication chamber 88 formed around the venturi tube 85. Further, a check valve 87 is disposed at a lower part in the figure of the venturi tube 85 so that water which flows in from the connecting portion 84 side is allowed to pass toward an upper side in the figure but is checked to pass in the reverse direction.

A cylinder 89 is screwed integrally in a watertight manner on the right side in the figure of the communication chamber 88, and a piston 91 is disposed slidably upward and downward in a watertight manner through an O-ring 90 in the cylinder 89. In this piston 91 is formed inside a housing recessed portion 91A which is opened toward the downward side in the figure, and an upper end portion of a compression spring 98 is inserted into the housing recessed portion 91A. Further, the lower end portion in the figure of the compression spring 98 is in an abutting state against a suction valve 92 which is disposed fixedly at a lower end portion in the cylinder 89.

The suction valve 92 is provided with a main body 92A fixed watertightly in a cylinder 89 through an O-ring 93 and a protruded cylindrical portion 92B which is formed integrally with the main body 92A in an

EP 0 430 223 B1

upwardly protruding manner. A spring 96 is disposed in the protruded cylindrical portion 92B, and a shaft 94 provided with a valve body 95 at the upper end thereof is disposed movably upward and downward at the central portion thereof. A needle is formed at the lower end portion of the shaft 94, and abuts against the bottom face side of the cylinder 89 so as to open and close an air hole 97 which is formed by boring in a communicating manner with atmospheric air. It is possible to introduce outside air through the suction valve 92 into the cylinder 89 through the air hole 97, and the suction valve 92 allows air to pass in the introducing direction to the cylinder 89 side, but it can prevent a counterflow by closing the air hole 97 in a reverse direction.

Further, in the present embodiment, the protruded cylindrical portion 92B of the suction valve 92 is formed in such a dimension that makes it possible to insert into the housing recessed portion 91A of the piston 11, and the protruded cylindrical portion 92B of the suction valve 92 is inserted into the housing recessed portion 91A in a state that the piston 91 moves downward and abuts against the main body 92A of the suction valve 92.

In such a construction, the feed water pressure acts on the communication chamber 88 through the through port 86 of the venturi tube 85 in a state that a feed water pressure is applied to the inside of a feed water line of faucet fixtures not shown, and water is filled inside the communication chamber 88 and the filled water pushes the piston 91 down to such a position as shown in Fig. 6 against the urging force of the compression spring 98. In this state, the upper part of the cylinder 89 is filled with water and air is compressed together with the compression spring 98 in the lower position of the cylinder 89, thus presenting an equillibrium state.

When a cock of faucet fixtures not shown is opened in this state, water passes through the venturi tube 85 and the internal pressure of the throttle portion 85A is reduced at this time. Thus, the water filled in the communication chamber 88 is discharged into the venturi tube 85 through the through port 86 with the reduction of the internal pressure. In this state, the piston moves upward, and when the air pressure in the cylinder 89 comes down to atmospheric pressure and below with the above, the suction valve 92 is opened and outside air is introduced into the cylinder 89 through the air hole 97 along with releasement of the valve body 95 of the suction valve 92.

When a cock of faucet fixtures is closed suddenly in this state, an impulse wave is generated in a feed water passage, and this generated impulse wave is propagated into the communication chamber 88 through the through port 86 of the throttle portion 85A after passing through the venturi tube 85. The impulse wave transmitted into the communication chamber 88 pushes down the piston 91 instantaneously, and the piston 91 moves down. Thus, the impulse wave is absorbed nicely by the reaction of the compression spring 98. Further, since the suction valve 92 is kept closed at this time, air in the cylinder 89 is also compressed by the downward movement of the piston 91, and the impulse wave can be absorbed by the reaction of this compressed air.

Incidentally, an impulse wave is generated in a feed water line sometimes when the piston 91 is moving downwardly, for example, as shown in Fig. 6. In such a case, the impulse wave propagated to the upper part of the cylinder 89 in a state shown in Fig. 6 (a state in which a feed water pressure is high, or a state in which faucet fixtures are throttled) presses the piston 91 further downward. At this time, the piston 91 moves downward proximately to the maximal movement position where it abuts against the main body 92A of the suction valve 92, and the compression spring 98 is compressed in the housing recessed portion 91a of the piston 91 and presents a compressed state. Furthermore, the protruded cylindrical portion 92B of the suction valve 92 enters into the housing recessed portion 91A of the piston 91, and the compressed air existing in the housing recessed portion 91A is compressed further by this protruded cylindrical portion 92B. Thus, the air in the housing recessed portion 91A presents an extremely compressed state, and produces a strong reaction. A very strong reaction is created together with the repulsive force of the compression spring 98 which has been compressed so as to oppose against the impulse wave, whereby making it possible to absorb the impulse wave nicely.

Besides, since the protruded cylindrical portion 92B of the suction valve 92 can be inserted loosely into the housing recessed portion 91A, the movement quantity of the piston 91 is larger than that of a conventional unit by that portion. Therefore, it is possible to secure a long downward movement distance of the piston 91 and increase the absorbing function against an impulse wave.

Furthermore, even when a sudden impulse wave is generated, air is compressed forcibly in the housing recessed portion 91A at the maximal movement position of the piston 91 as described above. Therefore, it is possible to protect damages of feed water pipe lines and the like satisfactorily by absorbing an impulse wave by compressive reaction of air.

As stated, in the modes shown in Figs. 5 and 6, a water hammer absorber of a type in which an impulse wave generated in a channel is absorbed by the movement of a piston disposed in a cylinder

9

through a spring is constructed so that a recessed portion in which the spring can be housed is formed in the piston and at least a part of a suction valve disposed fixedly on an opposite side can be inserted loosely into the recessed portion when the piston has moved at the maximum, whereby making it possible to absorb an impulse wave generated in a channel nicely by means of the reaction of the spring and the reaction of the compressed air which is compressed by the piston and the suction valve. In particular, since a state in which a part of the suction valve is inserted into the recessed portion of the piston is presented at the time of maximal movement of the piston, air is compressed forcibly in the recessed portion, thereby making it possible to oppose strongly against a sudden impulse wave. Further, since it is possible to secure a larger movement quantity of the piston than before, there is an effect of displaying water hammer preventive function sufficiently.

## Claims

**1.** A water hammer absorber (10, 81) comprising:
a venturi portion (18, 85) which is disposed on a feed water passage and generates a low pressure portion by dropping the pressure at a throttle portion (20, 85A) when a water flow is produced;
wherein said absorber further comprises a cylinder (26, 89) which has an inside cylinder chamber communicating with the throttle portion (20, 85A) of said venturi portion (18, 85) through a communication port (28); and
**characterized in that**
a piston (34, 91) is fitted slidably in said cylinder (26, 89);
a spring (38, 98) is provided which urges said piston (34, 91) toward the side of the communication port (28) of said cylinder chamber;
said spring (38, 98) having a spring force of such a value that the piston (34, 91) is pushed forward to the front end portion of the cylinder (26, 89) which is located at the side of the communication port (28), when a water flow is produced in said passage and said piston (34, 91) is stopped before abutting against the rear end portion being located opposite to the front end portion of the cylinder (26, 89) when sudden pressure rise is produced in said passage and the piston (34, 91) is pushed backward, and in that a space portion on an opposite side, located towards said rear end portion across said piston (34, 91) in said cylinder chamber communicates with atmospheric air through an air passage (30, 42, 97), and a check valve (48, 92) which allows air flow toward the inside of the cylinder and checks air flow in an opposite direction is provided in the air passage.

**2.** A water hammer absorber according to claim 1, wherein a recessed portion (40, 91A) which can house said spring (38, 98) is formed in said piston (34, 91), and at least a part of said check valve (48, 92) disposed fixedly on said rear end portion side in the cylinder can be moved freely when the piston moves at the maximum.

## Patentansprüche

**1.** Wasserschlagabsorber (10, 81), der aufweist:
einen Venturi-Bereich (18, 85), der an einem Speisewasserkanal angeordnet ist und einen Niederdruckbereich durch Herabsetzen des Drucks an einem Drosselbereich (20, 85A) erzeugt, wenn eine Wasserströmung erzeugt wird;
wobei der Absorber weiterhin einen Zylinder (26, 89), der eine innenseitige Zylinderkammer besitzt, die mit dem Drosselbereich (20, 85A) des Venturi-Bereichs (18, 85) über eine Verbindungsöffnung (28) in Verbindung steht, aufweist, und gekennzeichnet ist dadurch,
daß ein Kolben (34, 91) gleitbar in dem Zylinder (26, 89) eingepaßt ist;
daß eine Feder (38, 98) vorgesehen ist, die den Kolben (34, 91) zu der Seite der Verbindungsöffnung (28) der Zylinderkammer hin drückt;
daß die Feder (38, 98) eine Federkraft eines solchen Werts besitzt, daß der Kolben (34, 91) nach vorne zu dem vorderen Endbereich des Zylinders (26, 89) gedrückt wird, der an der Seite der Verbindungsöffnung (28) angeordnet ist, wenn eine Wasserströmung in dem Durchgangsweg erzeugt wird, und daß der Kolben (34, 91) vor einem Anschlagen gegen den hinteren Endbereich, der gegenüberliegend dem vorderen Endbereich des Zylinders (26, 89) angeordnet ist, gestoppt wird, wenn ein plötzlicher Druckanstieg in dem Durchgangsweg erzeugt wird und der Kolben (34, 91) nach hinten gedrückt wird, und daß ein Abstandsbereich an einer gegenüberliegenden Seite, die zu dem hinteren Endbereich hin über dem Kolben (34, 91) in der Zylinderkammer angeordnet ist, mit der Atmosphärenluft über einen Luftdurchgangsweg (30, 42, 97) in Verbindung steht, und ein Absperrventil (48, 92), das ermöglicht, daß Luft zu der Innenseite des Zylinders strömt und eine Luftströmung in einer entgegengesetzten Richtung sperrt, in dem Luftdurchgangsweg vorgesehen ist.

2. Wasserschlagabsorber nach Anspruch 1, wobei ein ausgenommener Bereich (40, 91A), der die Feder (38, 98) aufnehmen kann, in dem Kolben (34, 91) gebildet ist, und sich mindestens ein Teil des Absperrventils (48, 92), der fest an der Seite des hinteren Endbereichs in dem Zylinder angeordnet ist, frei bewegt werden kann, wenn sich der Kolben zu dem Maximum bewegt.

**Revendications**

1. Absorbeur de coups de bélier (10, 81) comprenant : une partie venturi (18, 85) qui est disposée sur un passage d'eau d'alimentation et crée une partie de basse pression en faisant baisser la pression dans une partie d'étranglement (20, 85A) quand il se produit un écoulement d'eau ;

   dans lequel ledit absorbeur comprend en outre un cylindre (26, 89) qui a une chambre de cylindre intérieure communiquant avec la partie d'étranglement (20, 85A) de ladite partie venturi (18, 85) à travers un orifice de communication (28) ; et
   caractérisé en ce que
   un piston (34, 91) est fixé de façon coulissante dans ledit cylindre (26, 89) ;
   il existe un ressort (38, 98) qui pousse ledit piston (34, 91) vers le côté de l'orifice de communication (28) de ladite chambre de cylindre ;
   ledit ressort (38, 98) ayant une force de ressort d'une valeur telle que le piston (34, 91) est poussé en avant vers la partie d'extrémité avant du vérin (26, 89), qui est située sur le côté de l'orifice de communication (28), quand un écoulement d'eau se produit dans ledit passage et ledit piston (34, 91) s'arrête, avant de s'appuyer contre la partie d'extrémité arrière qui est située à l'opposé de la partie d'extrémité avant du cylindre (26, 89), quand une montée de pression soudaine se produit dans ledit passage, et le piston (34, 91) est poussé vers l'arrière,
   et en ce qu'une partie d'espace sur un côté opposé, située vers ladite partie d'extrémité arrière transversale audit piston (34, 91) dans ladite chambre de cylindre, communique avec l'air atmosphérique à travers un passage d'air (30, 42, 97), et qu'un clapet de retenue (48, 92) qui permet l'écoulement d'air vers l'intérieur du cylindre et l'arrête dans une direction opposée, est prévu dans le passage d'air.

2. Asorbeur de coups de bélier selon la revendication 1, dans lequel une partie évidée (40, 91A) qui peut loger ledit ressort (38, 98) est ménagée dans ledit piston (34, 91) et au moins une partie dudit clapet de retenue (48, 92) disposé fixement sur ledit côté de la partie d'extrémité arrière du cylindre peut se déplacer librement quand le piston se déplace au maximum.

# FIG.1

# FIG.2

# FIG.3

EP 0 430 223 B1

# FIG.4

# FIG.5

# FIG.6